# EUROPÄISCHE PATENTSCHRIFT

(11) **EP 2 359 673 B1**
(45) Veröffentlichungstag und Bekanntmachung des Hinweises auf die Patenterteilung: **26.09.2012**
(21) Anmeldenummer: 11401027.5
(22) Anmeldetag: 21.02.2011
(51) Int. Cl.: A01C 17/00

(54) **Schleuderstreuer**
Centrifugal spreader
Epandeur d'engrais centrifuge

(30) Priorität: 24.02.2010 DE 102010000529
(43) Veröffentlichungstag der Anmeldung: 24.08.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Krabbe, Ulrich, 49205 Hasbergen (DE); Wiebusch, Thorsten, 49205 Hasbergen (DE); Bäumker, Herbert, 49176 Hilter (DE); Lampert, Tobias, 49504 Lotte (DE)

(56) Entgegenhaltungen:
- EP-A1- 0 611 264
- EP-A1- 0 981 939
- EP-A1- 1 721 502
- DE-A1- 4 412 809

## Beschreibung

Die Erfindung betrifft einen Schleuderstreuer gemäß des Oberbegriffes des Patentanspruches 1.

Ein derartiger Schleuderstreuer ist beispielsweise durch die EP 1 721 502 A1 bekannt geworden. Dieser Schleuderstreuer weist unterhalb der Auslauföffnungen oder Dosiereinrichtungen eines Vorratsbehälters umlaufende Schleuderscheiben mit darauf angeordneten Wurfschaufeln auf. Aus den Auslauföffnungen bzw. den Dosiereinrichtungen tritt der dosierte Düngerstrom im Fallstrom nach unten aus, so dass die Wurfschaufeln mit ihrem inneren Bereich den von oben kommenden Streugutstrahl mit ihrem inneren Bereich queren. Vom Anfang bis zum Ende der Wurfschaufeln ist in deren jeweiligen Rückwand eine die Rückwand in zwei übereinander liegende Teilbereiche trennende und aus der jeweiligen Rückwand in Drehrichtung heraustretende Trennwand angeordnet. Hierdurch wird der Streugutstrahl bereits im inneren Bereich unmittelbar nach dem Einfangen von dem inneren Bereich der Wurfschaufel in zwei Teilströme getrennt, ohne dass das eingefangene Streugutmaterial die Möglichkeit hat, sich über die Höhe der Wurfschaufel entsprechend zu verteilen. Dies kann zu unerwünschten Nebenwirkungen, die in einer ungleichmäßigen Düngerverteilung des Düngers auf der Bodenoberfläche münden, führen.

Der Erfindung liegt die Aufgabe zugrunde, eine verbesserte und gleichmäßigere Düngerausbringung auch bei großen Arbeitsbreiten zu gewährleisten.

Diese Aufgabe wird erfindungsgemäß dadurch gelöst, dass der äußere Bereich gegenüber dem inneren Bereich der Wurfschaufel nach oben abgewinkelt ausgebildet ist, dass die Trennwand erst außerhalb des Bereiches, der den Streugutstrahl quert, beginnt.

Infolge dieser Maßnahmen wird es ermöglicht, dass durch den späteren Beginn der Trennwand, d.h. außerhalb des von der Wurfschaufel durchquerenden Bereiches des Streugutstrahl erst beginnt sowie durch die Abwinklung des inneren Bereiches der Wurfschaufel zu dem äußeren Bereich in einfacher Weise eine hohe Gleichmäßigkeit der Düngerverteilung für eine große Anzahl verschiedener Düngerarten mit unterschiedlichsten Streueigenschaften zu erreichen. Durch die Abwinklung des äußeren Bereiches gegenüber dem inneren Bereich wird weiterhin sowohl eine Vergleichmäßigung wie auch eine große Wurfweite ermöglicht.

Um zu ermöglichen, dass zunächst in dem Anfangsbereich das sich das aufgefangene Düngermaterial über die Höhe der Wurfschaufel in entsprechender Weise verteilen kann und erst im daran anschließenden Bereich, nämlich außerhalb des Bereiches der den Streugutstrahl durchquerenden, in der Rückwand angeordneten Trennwand in zwei Teilströme aufgeteilt wird, um die gewünschte gleichmäßige Verteilung des Düngers auf der Bodenoberfläche zu erreichen, sind die vorgenannten erfindungsgemäßen Maßnahmen vorgesehen.

Somit wird also durch die vorgeschlagenen Maßnahmen mit einfachen Mitteln eine gleichmäßige Verteilung des Düngers mit einer einfach ausgebildeten Wurfschaufel geschaffen.

Hierbei hat sich als vorteilhaft herausgestellt, dass die Trennwand mit Abstand zu dem Bereich, der den Streugutstrahl quert, beginnt.

Eine einfache Herstellung der Wurfschaufel mit einer Trennwand in der Rückwand, die aus zwei zueinander abgewinkelten Bereichen besteht, lässt sich dadurch erreichen, dass die Trennwand im Bereich der Abwinklung des inneren Bereiches der Wurfschaufel zu dem äußeren Bereich der Wurfschaufel beginnt.

In einfacher Weise lässt sich die Trennwand dadurch ausgestalten, dass die Trennwand als in die Rückwand eingeprägte Sicke ausgebildet ist.

Um zu vermeiden, dass es zu einem Materialstau in der Wurfschaufel kommt, wenn das Düngermaterial durch die Fliegkraft nach außen transportiert wird, ist vorgesehen, dass die Ober- und Unterschenkel und die Trennwand derart zueinander angeordnet sind, dass sich der jeweilig Abstand zwischen Ober- und Unterschenkel einerseits und der Trennwand andererseits sich in radialer Richtung nach außen gesehen nicht verkleinert.

Die EP 0 611 264 A1 sowie die EP 1 213 345 A1 zeigen Wurfschaufeln für einen Schleuderdüngerstreuer deren Rückwände durch Einprägung in mehrere Teilstrombereiche aufgeteilt sind. Diese Einprägungen beginnen mit Abstand vom inneren Ende der Wurfschaufel. Die Zuführung des Düngers in die Wurfschaufeln erfolgt hier nicht von oben, sondern aus einer mittigen Kammer seitlich von innen nach außen in radialer und horizontaler Richtung. Diese Düngerzuführung unterscheidet sich wesentlich von der Düngerzuführung gemäß der EP 1 721 502 A1 bzw. gemäß dem erfindungsgemäßen Schleuderstreuer.

Weitere Einzelheiten der Erfindung sind der Beispielsbeschreibung und den Zeichnungen zu entnehmen.

### Hierbei zeigen

- Fig. 1: den Schleuderdüngerstreuer in perspektivischer Darstellung,
- Fig. 2: die längere der erfindungsgemäßen Wurfschaufel in Vorderansicht,
- Fig. 3: die Wurfschaufel gemäß Fig. 2 im Schnitt III -III,
- Fig. 4: die Wurfschaufel gemäß Fig. 2 im Schnitt IV -IV,
- Fig. 5: eine weitere der erfindungsgemäßen Wurfschaufel nach der Darstellungsweise der Fig.2,
- Fig. 6: eine weitere der erfindungsgemäßen Wurfschaufel nach der Darstellungsweise der Fig.2 und
- Fig. 7: eine weitere der erfindungsgemäßen Wurfschaufel nach der Darstellungsweise der Fig.2.

Der Schleuderdüngerstreuer weist den Rahmen 1 auf. Auf der Vorderseite des Rahmens 1 sind Dreipunktkupplungselemente 2 zum Anbau des Schleuderstreuers an die Dreipunktkupplung eines Ackerschleppers angeordnet. An dem Rahmen 1 ist der Vorratsbehälter 3 befestigt, der zwei durch ein dachförmiges Mittelteil 4 getrennte Auslauftrichter 5 aufweist. Die beiden Auslauftrichter 5 sind in ihrem unteren Bereich in bekannter Weise jeweils durch eine Dosiereinrichtung 6 verschlossen. Die Dosiereinrichtungen 6 weisen jeweils eine Bodenplatte auf, in welcher eine durch einen Schieber in ihrer Öffnungsweite einstellbare Auslauföffnung angeordnet ist. An die Auslauföffnungen schließt ein sich die Auslauföffnungen nach unten verlängernder Auslaufschacht 7 an.

Unterhalb jedes Auslaufschachtes 7, also den Dosiereinrichtungen 6 ist jeweils eine rotierend angetriebene Schleuderscheibe 8 mit darauf angeordneten Wurfschaufeln 9 angeordnet. Die Schleuderscheiben 8 werden über eine Antriebsvorrichtung 10 im einander entgegengesetzten Drehsinn angetrieben.

Aus der Auslauföffnung tritt das Streugut im Fallstrom strahlartig nach unten aus und wird durch den Auslaufschacht 7 bis zur Oberkante 11 der auf der Schleuderscheiben 8 angeordneten Wurfschaufel 9 geführt.

Die Wurfschaufeln 9 weisen eine im Querschnitt gesehen U-förmige Form auf. Sie bestehen aus einer Rückwand 12, einem oberen zu der Rückwand 12 abgebogenen Schenkel 13 und einen unteren zu der Rückwand 12 ebenfalls abgebogenen Schenkel 14. Die Rückwand 12 mit dem oberen Schenkel 13 und dem unteren Schenkel 14 bilden jeweils die U-förmig ausgeformten Wurfschaufeln 9.

Die Wurfschaufel 9 ist in einen inneren Bereich 15 und einen äußeren Bereich 16 aufzuteilen, wobei der äußere Bereich 16 gegenüber dem inneren Bereich 15 der Wurfschaufel 9 nach oben abgewinkelt ist.

Der innere Bereich 15 der Wurfschaufel 9 verläuft parallel zur im Ausführungsbeispiel planen Oberfläche der Schleuderscheibe 8. Die Schleuderscheibenachse 17, um die die Schleuderscheibe 8 rotiert, ist zur Auslauföffnung und somit auch zum Auslaufschacht 7 versetzt angeordnet. Der innere Bereich 15 der Wurfschaufel 8 erstreckt sich über die gesamte radiale Ausdehnung des Auslaufschachtes 7 und des aus dem Auslaufschacht 7 in Richtung der Schleuderscheibe 8 strömenden Streugutstrahls in Richtung zum Außenumfang der Schleuderscheibe 8.

Die Wurfschaufel 9 bildet im Wesentlichen eine in Drehrichtung der Schleuderscheibe 8 und radialer Richtung offene Rinne, wie die Zeichnungen zeigen. Wie bereits erwähnt, ist diese offene Rinne nach oben durch den oberen Schenkel 13 der Wurfschaufel 8 begrenzt.

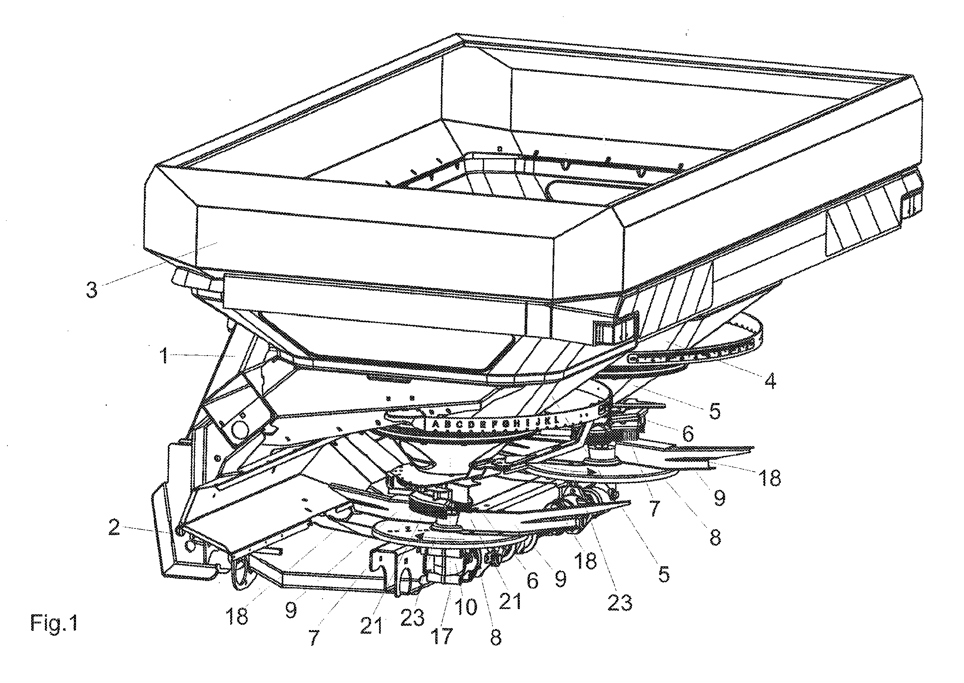

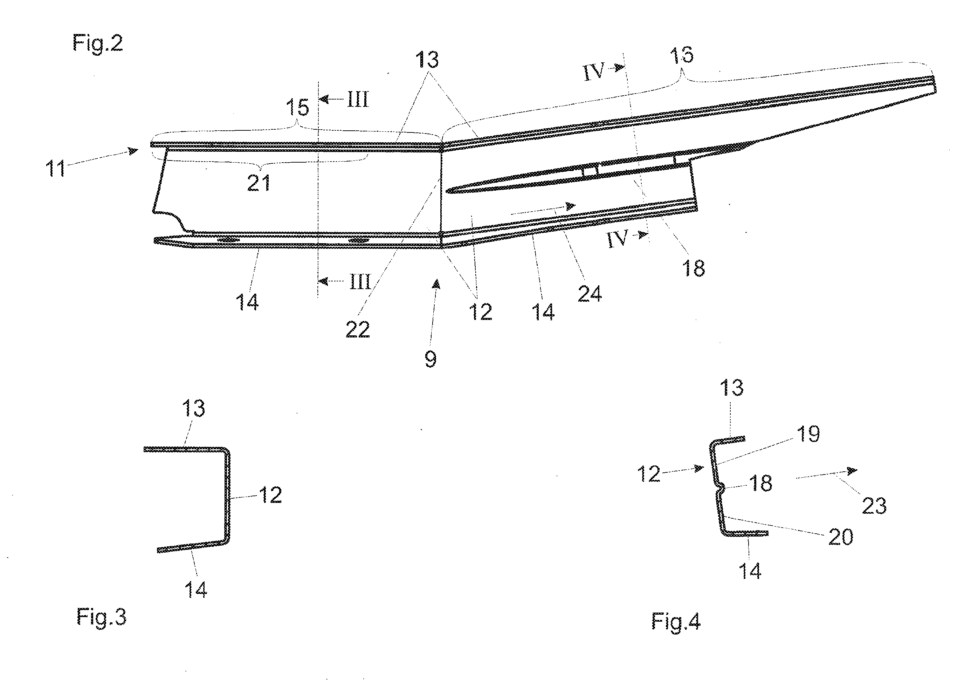

In Fig. 2 ist die längere Wurfschaufel 9 in Vorderansicht, d.h. in Drehrichtung auf den Betrachter zulaufender Sicht dargestellt. Wie sowohl in den Fig. 1 wie auch in Fig. 2 erkennbar ist, ist der äußere Teilbereich 16 der Wurfschaufel 9, der gegenüber dem inneren Teilbereich 15 nach oben abgewinkelt. Die Rückwand 12 des äußeren Teilbereiches 16 der Wurfschaufel 9 ist durch eine Trennwand 18 in einen oberen 19 und eine unteren 20 rinnenartigen Kanal getrennt. Hierbei beginnt die Trennwand 18 erst außerhalb des Bereiches 21, der den Streugutstrahl quert. Hierbei beginnt die Trennwand 18 mit Abstand zu dem Bereich 21, der den Streugutstrahl quert und zwar im Ausführungsbeispiel erst im Bereich 22 der Abwinklung des inneren Bereiches 15 der Wurfschaufel 9 zu dem äußeren Bereich 16. Die Trennwand 18 tritt aus der Rückwand 12 der Wurfschaufel 9 in Drehrichtung 23 heraus. Die Trennwand 18 ist als in die Rückwand 12 eingeprägte Sicke ausgebildet, was in Fig. 4 zu erkennen ist. Im inneren Bereich 21, der den Streugutstrahl quert ist eine ebene Fläche der Rückwand 12 vorhanden, wie Fig. 3 zeigt.

Der Ober- 13 und der Unterschenkel 14 sowie die Trennwand 15 sind derart zueinander angeordnet, dass sich der jeweilige Abstand zwischen Ober- 13 und Unterschenkel 14 einerseits und der Trennwand 18 andererseits sich in radialer Richtung 24 nach außen gesehen nicht verkleinert.

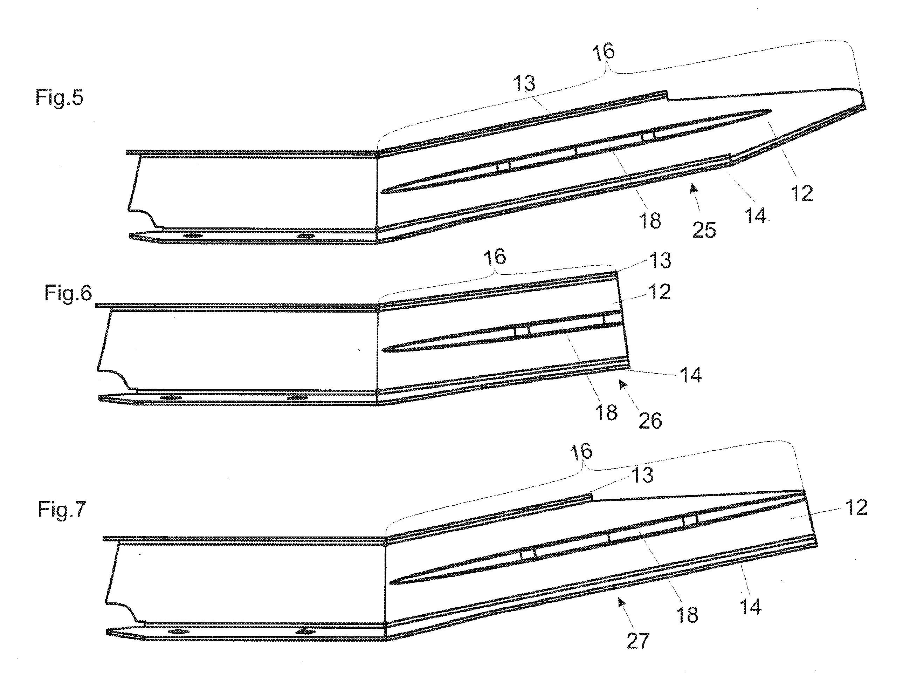

Die Wurfschaufeln 25, 26, 27 gemäß den Fig. 5, 6 und 7 zeichnen sich durch eine unterschiedliche Ausgestaltung des äußersten Bereiches 16 der jeweiligen Wurfschaufel 25, 26, 27 an ihrem äußeren Ende im Vergleich zu der Wurfschaufel 9 auf. Hierbei sind in unterschiedlicher Weise die Rückwand 12 bzw. der obere 13 und untere 14 Schenkel gekürzt bzw. schräg angeschnitten, um eine entsprechend gleichmäßige Streugutverteilung bei unterschiedlichen Arbeitsbereichen und für unterschiedliche Düngerarten mit unterschiedlichen Streueigenschaften zu erreichen.

## Patentansprüche

1. Schleuderstreuer für rieselfähiges Gut, insbesondere Dünger, mit einem Vorratsbehälter (3) mit wenigstens einer einstellbaren Auslauföffnung und einem daran anschließenden Auslaufschacht (7) aus dem das Streugut im Fallstrom strahlartig austritt, und einer darunter um eine versetzt zum Auslauf angeordnete Achse rotierenden Schleuderscheibe (8) mit zumindest einer Wurfschaufel (9), der sich über die gesamte radiale Ausdehnung des Streugutstrahls in Richtung zum Umfang der Schleuderscheibe (8) erstreckt, wobei die Wurfschaufel (9) im wesentlichen eine in Drehrichtung und in radialer Richtung offene Rinne bildet, die nach oben durch einen in Umlaufrichtung weisenden Schenkel (13) begrenzt ist, wobei die Wurfschaufel (9) einen inneren Bereich (15) und einen äußeren Bereich (16) aufweist, wobei der innere Bereich (15) im wesentlichen parallel zu der Oberfläche der Schleuderscheibe (8) verläuft und den von oben kommenden Streugutstrahl quert, wobei zumindest in Teilbereichen der Rückwand (12) der Wurfschaufel (9) eine die Rückwand (12) in zwei übereinanderliegende Teilbereiche trennende und aus der Rückwand (12) in Drehrichtung heraustretende Trennwand (18) angeordnet ist, **dadurch gekennzeichnet, dass** der äußere Bereich (16) gegenüber dem inneren Bereich (15) der Wurfschaufel (9) nach oben abgewinkelt ausgebildet ist, dass die Trennwand (18) erst außerhalb des Bereiches (21), der den Streugutstrahl quert, beginnt.

2. Schleuderstreuer nach Anspruch 1, **dadurch gekennzeichnet, dass** in der Rückwand (12) nur des äußeren Bereiches (16) der Wurfschaufel (9) eine die Rückwand (12) in zwei übereinanderliegende Teilbereiche (19, 20) trennende und aus der Rückwand (12) in Drehrichtung (23) heraustretende Trennwand (18) angeordnet ist.

3. Schleuderstreuer nach Anspruch 1, **dadurch gekennzeichnet, dass** die Trennwand (18) mit Abstand zu dem Bereich (21), der den Streugutstrahl quert, beginnt.

4. Schleuderstreuer nach mindestens einem der vorstehenden Ansprüche, **dadurch gekennzeichnet, dass** die Trennwand (18) im Bereich (22) der Abwinklung des inneren Bereiches (15) der Wurfschaufel (9) zu dem äußeren Bereich (16) der Wurfschaufel (9) beginnt.

5. Schleuderstreuer nach mindestens einem der vorstehenden Ansprüche, **dadurch gekennzeichnet, dass** die Trennwand (18) als in die Rückwand (12) eingeprägte Sicke ausgebildet ist.

6. Schleuderstreuer nach mindestens einem der vorstehenden Ansprüche, **dadurch gekennzeichnet, dass** die Ober- (13) und Unterschenkel (14) und die Trennwand (15) derart zueinander angeordnet sind, dass sich der jeweilige Abstand zwischen Ober- (13) und Unterschenkel (14) einerseits und der Trennwand (18) andererseits sich in radialer Richtung (24) nach außen gesehen nicht verkleinert.

## Claims

1. Centrifugal spreader for pourable material, in particular fertilizer, with a storage container (3) having at least one adjustable outlet opening and an adjoining outlet shaft (7), from which the spreading material emerges in a dropping stream in the manner of a jet, and with a centrifugal disc (8) which rotates therebelow about an axis offset with respect to the outlet and has at least one thrower blade (9) which extends over the entire radial extent of the spreading material jet in the direction of the circumference of the centrifugal disc (8), wherein the thrower blade (9) substantially forms a channel which is open in the direction of rotation and in the radial direction and is upwardly bounded by a limb (13) pointing in the revolving direction, wherein the thrower blade (9) has an inner region (15) and an outer region (16), wherein the inner region (15) runs substantially parallel to the surface of the centrifugal disc (8) and crosses the spreading material jet coming from above, wherein a partition (18) which separates the back wall (12) into two partial regions located one above the other and emerges from the back wall (12) in the direction of rotation is arranged at least in partial regions of the back wall (12) of the thrower blade (9), **characterized in that** the outer region (16) is designed to be angled upwards in relation to the inner region (15) of the thrower blade (9), and **in that** the partition (18) begins only outside the region (21) which crosses the spreading material jet.

2. Centrifugal spreader according to Claim 1, **characterized in that** a partition (18) which separates the back wall (12) into two partial regions (19, 20) located one above the other and emerges from the back wall (12) in the direction of rotation (23) is arranged in the back wall (12) only of the outer region (16) of the thrower blade (9).

3. Centrifugal spreader according to Claim 1, **characterized in that** the partition (18) begins at a distance from the region (21) which crosses the spreading material jet.

4. Centrifugal spreader according to at least one of the preceding claims, **characterized in that** the partition (18) begins in the region (22) of the angling of the inner region (15) of the thrower blade (9) with respect to the outer region (16) of the thrower blade (9).

5. Centrifugal spreader according to at least one of the preceding claims, **characterized in that** the partition (18) is designed as a bead impressed into the back wall (12).

6. Centrifugal spreader according to at least one of the preceding claims, **characterized in that** the upper limb (13) and lower limb (14) and the partition (18) are arranged with respect to one another in such a manner that the distance between the upper limb (13) and lower limb (14), on the one hand, and the partition (18), on the other hand, is not reduced in the radial direction (24), as seen outwards.

## Revendications

1. Epandeur centrifuge pour produit coulant, notamment des engrais, comprenant un réservoir (3) avec au moins une ouverture de sortie ajustable et une goulotte de sortie s'y raccordant (7), hors de laquelle le produit à épandre sort en tombant sous forme de jet, et un disque centrifuge (8) sous-jacent tournant autour d'un axe disposé de manière décalée par rapport à la sortie, avec au moins une pale d'éjection (9) qui s'étend sur toute l'étendue radiale du jet de produit à épandre, dans la direction de la périphérie du disque centrifuge (8), la pale d'éjection (9) formant essentiellement une rigole ouverte dans la direction de rotation et dans la direction radiale, laquelle est limitée vers le haut par une branche (13) tournée dans la direction périphérique, la pale d'éjection (9) présentant une région interne (15) et une région externe (16), la région interne (15) s'étendant essentiellement parallèlement à la surface du disque centrifuge (8) et traversant le jet de produit à épandre arrivant par le haut, au moins dans des régions partielles de la paroi arrière (12) de la pale d'éjection (9) étant disposée une paroi de séparation (18) séparant la paroi arrière (12) en deux régions partielles superposées et sortant de la paroi arrière (12) dans la direction de rotation, **caractérisé en ce que** la région extérieure (16) est réalisée de manière coudée vers le haut par rapport à la région interne (15) de la pale d'éjection (9), et **en ce que** la paroi de séparation (18) commence seulement à l'extérieur de la région (21) qui traverse le jet de produit à épandre.

2. Epandeur centrifuge selon la revendication 1, **caractérisé en ce que** dans la paroi arrière (12) de seulement la région extérieure (16) de la pale d'éjection (9) est disposée une paroi de séparation (18) séparant la paroi arrière (12) en deux régions partielles superposées (19, 20), et sortant de la paroi arrière (12) dans la direction de rotation (23).

3. Epandeur centrifuge selon la revendication 1, **caractérisé en ce que** la paroi de séparation (18) commence à distance de la région (21) qui traverse le jet de produit à épandre.

4. Epandeur centrifuge selon au moins l'une quelconque des revendications précédentes, **caractérisé en ce que** la paroi de séparation (18) commence dans la région (22) du coude de la région interne (15) de la pale d'éjection (9) jusqu'à la région extérieure (16) de la pale d'éjection (9).

5. Epandeur centrifuge selon au moins l'une quelconque des revendications précédentes, **caractérisé en ce que** la paroi de séparation (18) est réalisée sous forme de moulure gaufrée dans la paroi arrière (12).

6. Epandeur centrifuge selon au moins l'une quelconque des revendications précédentes, **caractérisé en ce que** la branche supérieure (13) et la branche inférieure (14) et la paroi de séparation (18) sont disposées les unes par rapport aux autres de telle sorte que la distance respective entre la branche supérieure (13) et la branche inférieure (14) d'une part, et la paroi de séparation (18) d'autre part, ne diminue pas dans la direction radiale (24), vu vers l'extérieur.
